# EUROPEAN PATENT SPECIFICATION

(11) **EP 4 162 705 B1**
(45) Date of publication and mention of the grant of the patent: **06.08.2025**
(21) Application number: 20731856.9
(22) Date of filing: 08.06.2020
(51) Int. Cl.: H04W 4/021, H04W 4/02, G01S 5/08, G01S 5/14

(54) **GEOFENCING SYSTEMS AND METHODS**
GEOFENCING-SYSTEME UND -VERFAHREN
SYSTÈMES ET PROCÉDÉS DE GÉOREPÉRAGE

(43) Date of publication of application: 12.04.2023
(73) Proprietor: Telefonaktiebolaget LM Ericsson (publ), 164 83 Stockholm (SE)
(72) Inventor: ÖKVIST, Peter, 973 41 LULEÅ (SE); LANDSTRÖM, Anders, 961 47 BODEN (SE); BERGSTRÖM, Daniel, 976 32 LULEÅ (SE); WÄNSTEDT, Stefan, 972 51 LULEÅ (SE); ARNGREN, Tommy, 954 42 SÖDRA SUNDERBY (SE); KRISTENSSON, Andreas, 247 35 SÖDRA SANDBY (SE); LINDERO, David, 795 96 LULEÅ (SE)
(74) Representative: Ericsson
(86) International application number: PCT/EP2020/065878
(87) International publication number: WO 2021/249618

(56) References cited:
- US-A1- 2019 182 627
- US-A1- 2019 281 574

## Description

### TECHNICAL FIELD

Disclosed are embodiments related to geofencing.

### BACKGROUND

### 1. Geofencing

Geofencing is a location-based service that triggers an action when a device enters a certain area (which is referred to as the "geofenced area"). Retail business sometimes use a geofencing system for advertising - - e.g., to engage a potential customer who is carrying their smartphone while they shop. These geofencing advertising systems may send relevant messages (e.g., coupons) to the potential customer's smartphone when the potential customer enters the retail store. Another technology area in which geofencing applied is home automation. For example, some home automation systems (see, e.g., sourceforge.net/projects/eventghost/) allow a homeowner to define an action to occur, such as activating selected lights, when the homeowner's smartphone (or other communication device) approaches the home. In order for such geofencing solutions to work, the geofencing system must be able to detect when a communication device has entered the geofenced area. There are several solutions that provide means for a geofencing system to receive location information identifying the location of a communication device. The most ubiquitous of these location solutions employ a Global Navigation Satellite System (GNSS), of which the Global Positioning System (GPS) is an example.

### 2. Device-to-Device (D2D) Communications

D2D communication applications range from public safety, traffic control/safety and commercial services like proximity based social networking, gaming, and advertisements for by-passers. Proximity based services can be provided when communication devices (also referred to herein as "user equipments (UEs)") are close to each other, and these services comprise *ProSe Direct Discovery* (identifies that two UEs are in proximity of each other; for two UEs in cellular coverage it may also be used for other commercial purposes), and *ProSe Direct Communication* between two UEs (resources from cellular traffic are reserved and used for this type of communication or enables communication in areas without cellular coverage).

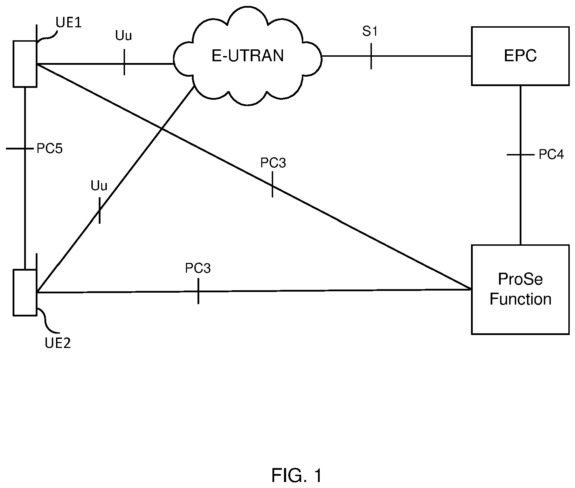

In this context SideLink (SL) is used for ProSe Direct Discovery and Prose Direct communication between UEs and the SL corresponds to the communication between two ProSe enabled UEs. SL communication describes the channel structure consisting of Logical, Transport and physical channels over the air interface to realize a ProSe application. FIG. 1 illustrates a simplified architecture for ProSe, including an SL interface (i.e., PC5) between UEs (e.g., between UE1 and UE2).

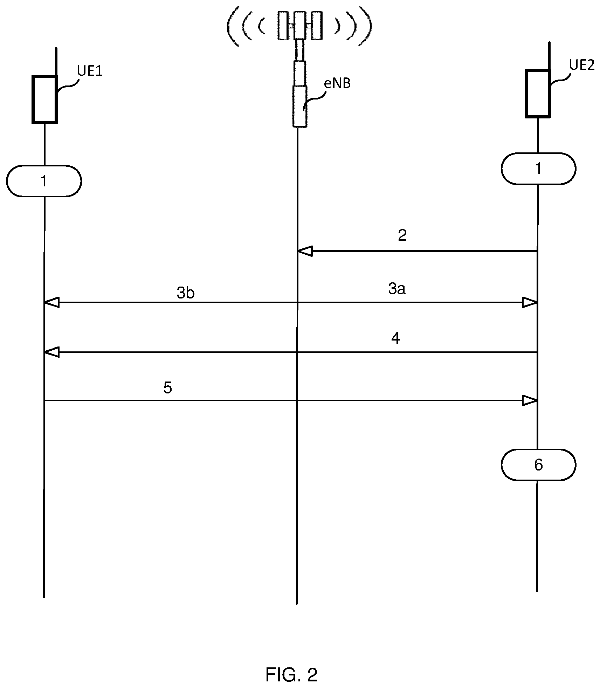

Several interfaces are associated with D2D communications; from a UE perspective, the most important ones are the PC5 interface between two UEs and the PC3 interface to a new defined node, the *ProSe Function.* For Release 12, the PC5 is a *one-to-many* communication interface. From a higher layer perspective, this is reflected in the assignment of destination IDs, which are always group IDs (to achieve some sort of unicast a group can have just one member). Using the PC3 interface, the UE contacts the ProSe Function. Typically, the IP address of the ProSe Function might be preconfigured (hard-coded) in the device. The alternative is that the device identifies the IP address of the ProSe Function via DNS look-up. To contact the ProSe Function the device has to establish an RRC connection with the network. FIG. 2 illustrates a scenario where a UE (denoted UE2) desires to communicate with any UE (denoted UE1) in the common eNB's coverage area. A D2D SL transmission over PC5 interface typically involves the following steps.

Step 1: UE1 and UE2 enter the eNB coverage area (or are powered on) and are informed of eNB V2x D2D capabilities via System Information Block (SIB)18 (see, e.g., 3GPP TS 36.331). Step 2: UE2 requests the eNB for permission to use resources for SL transmission over PC5. Step 3a: eNB acknowledges use of announcement over SL/PC targeting monitoring UE1 using by eNB selected resources. Step 3b: eNB then instructs UE1 not to use certain uplink resources for "own transmissions" since potential imminent incoming transmissions over SL/PC5 (allocated on UL resources) may be expected from a near announcing UE2. Step 4: UE2 requests UE1 to provide certain information. Step 5: UE1 provides UE2 with requested information. Step 6: Requested data from UE1 is made use of for related actions by UE2, or passed through and used in upper layers of UE2.

US 2019/182627 A1 represents relevant prior art in this technical field.

### SUMMARY

Certain challenges presently exist. For instance, many current geofencing solutions require GNSS coverage (e.g., GPS coverage), and one obvious drawback of a GNSS is that it may not function well indoors where GNSS coverage may be lacking.

Accordingly, this disclosure proposes a geofencing system that does not rely on a GNSS or other like system. In one embodiment, a geofenced area is formed using a group of two or more fence-pole devices (FPDs) (i.e., a group consisting at least of a first FPD and a second FPD). Each FPD in the group is capable of making its own determination as to whether or not a certain communication device appears to be within the geofenced area. As used herein, an FPD is a communication device capable of wirelessly communicating with other FPDs and the certain communication device. In some embodiments, an FPD is a small, easily movable device, like a smartphone or tablet or other consumer device, but in other embodiments an FPD may be fixed in place. In some embodiments, such a consumer device is configured with a geofencing application (GFA) that configures the consumer device to function as an FPD.

In one embodiment a method according to the independent claim 1 is provided.

In another aspect there is provided a computer program according to independent claim 7. In another aspect there is provided a carrier containing the computer program according to independent claim 8.

In another aspect there is provided a first fence-pole device according to independent claim 9.

A significant advantage of the embodiments disclosed herein is that the embodiments enable end users to establish a geofenced area simply by positioning the FPDs in desired locations. Accordingly, the end user do not need to rely on any network functionality or on a GNSS, which means that the embodiments can work just as well indoors as outdoors.

### BRIEF DESCRIPTION OF THE DRAWINGS

The accompanying drawings, which are incorporated herein and form part of the specification, illustrate various embodiments.
FIG. 1 illustrates a simplified architecture for ProSe.
FIG. 2 illustrates an example message flow.
FIG. 3 illustrates a group of FPDs according to an embodiment.
FIG. 4 illustrates a beam management procedure.
FIG. 5 illustrates a beam management procedure.
FIG. 6 illustrates a beam management procedure.
FIG. 7 is a flowchart illustrating a process according to some embodiments.
FIG. 8 is a flowchart illustrating a process according to some embodiments.
FIG. 9 is a flowchart illustrating a process according to some embodiments.
FIG. 10 illustrates a geofencing controller according to some embodiments.
FIG. 11 illustrates an FPD according to some embodiments.

### DETAILED DESCRIPTION

### 1. Introduction

This disclosure describes a geofencing system that comprises a group of N FPDs, where N is greater than 1, which group of FPDs work in cooperation with each other to decide whether or not a communication device is within a certain area (i.e., the geofenced area). An advantageous aspect of the geofencing system is that it does not rely on a GNSS or other wide-area communications network. In one embodiment, a geofenced area is formed using the group of FPDs, and each FPD in the group is capable of making its own determination as to whether or not the communication device "appears to be" within the geofenced area (that is, each FPD is capable of determining whether the communication could be inside the geofenced area). If at least a certain number of the FPDs (e.g., all N of the FPDs or N-1 of the FPDs) in the group have declared that the communication device appears to be (i.e., could be) within the geofenced area, then the communication device is determined to be within the geofenced area.

In one embodiment, each FPD in the group employs the device-to-device (D2D) SL communication protocol and refined beamforming as way to establish fencing directions (e.g., two-dimensional or three-dimensional) in respect to the other FPDs in the group. Beamforming is described in section 7.

The proposed system provides a way for end-users to easily establish a geofenced area. That is, the fencing functionality is controlled by users themselves, not the network, and the fending functionality does not required any GNSS positioning support. In some embodiments, as a further improvement, one or more of the FPD may have an image sensor (e.g., a camera) and data generated by the image sensor (e.g., distance information) may be used to establish relevant SL transmit (Tx) power settings as well as to more efficiently determine the beam refinement directions (shorter connection times) (or as a means to verify that identified refined beams actually point in relevant direction as the the image senor may capture unexpected reflections).

### 2. Example Use Case

### 2.1 Establishing the Geofenced Area

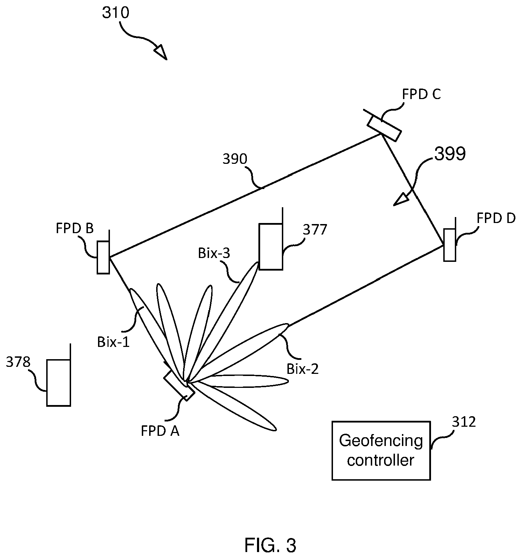

FIG. 3 illustrates an example use case. In this use case a geofencing system 310 comprises a group of four FPDs - - i.e., FPD A, FPD B, FPD C, and FPD D, which are placed on a meeting room table 390 at intended fence-pole positions. This group of FPDs is referred to as a fence-pole group (FPG). Each FPD has a respective GFA that is invoked so that the FPD can identify the other FPDs in the FPG. Establishment of the intended FPG may be pre-initiated, distributing relevant defining credentials among the FPDs of the group. Geofencing system 310 also includes a geofencing controller 312. While geofencing controller 312 is shown as being separate from the FPDs, this is not a requirement. In some embodiments, geofencing controller 312 is a component of one or more of the FPDs.

In one approach, a first FPD within the group (e.g., FPD A) initiates the use of D2D SL to issue a first D2D SL connection establishment request via an announcement among either the devices being identified via the GFA or implicitly as a result of whatever devices that respond to the FPD A's request.

In the step of establishing a D2D SL, beam connectivity to other devices in the FPG is performed with the purpose of establishing relative directions (and hence their respective locality within the FPG). FPD A initiates requests to a base station of a cellular communication network (e.g., base station of 3GPP 4G network (eNB)) for permission to use resources for a SL transmission over the PC5 interface, to which it is assumed that the eNB indicates resource allocations for considered FPD, i.e., announcing FPD A and monitoring FPD B, C, and D (which FPD A already may know of given a preceding FPG establishment over application layer). According to any relevant step as described in section 7, FPD A handshakes beamforming capabilities with the other FPDs of the group and, assuming that narrow-beam capabilities are identified, establishes a D2D connection based on refined beams, as described below in section 7. In this procedure, it can be understood that certain refined beam capabilities are being requested for targeted FPDs; if, for example, one intended FPD does not support (sufficient) beam refinement capabilities, it may be excluded from the initial forming of the FPG.

For FPD A this means that a D2D SL refined beam index is identified for all its FPG connections. Given its current position on the table and given its recent establishment of refined D2D SL beams to its communication peers, FPD A has derived a beam-to-other-FPD lookup, and hence knows each other FPD's relative locations in the spatial domain. Typically, FPD A knows that FPD B is to its left, FPD D is to its right, and what devices that are in-between (i.e., FPD C in this example). After passing tokens on establishing D2D SL connections within the FPG, all FPDs have knowledge of the relative direction to other FPDs.

In a second step, given that FPD A has a beam index for each other FPD in the group, FPD A can translate beam directions into a vector or angle representation considering the origin to be its own location. Alternatively, the lookup to vector/angular space may be accomplished by a device preparative to this activity, and only the mapping is executed. It is also assumed that in the vector space, the length of beam vectors further may correspond to used D2D SL transmit power as described in previous steps.

At this stage, FPD A has two vectors or an angle that defines a "spanning area" for FPD A. In this example the two vectors are a leftmost "border" vector (corresponding to beam index (Bix-1)) that defines one border of a geofenced area 399 and one rightmost "border" vector (corresponding to Bix-2) that defines another border of the geofenced area. The same is true for FPD B, FPD C, and FPD D. That is each of these FPDs also has two border vectors that, for the given FPD, defines a spanning area.

### 2.2 Determining whether a Device is Within the Geofenced Area

Given that each of the FPDs can establish a direction from the FPD to a certain communication device and can translate this direction to a vector representation for the communication device, each of the FPDs can use its two border vectors and the vector for the communication device to make an assessment as to whether the communication device appears to be inside the geofenced area 399. For example, if FPD A determines that the vector for the communication device is within FPD A's spanning area (i.e., between the left border vector and the right border vector) then, in this case, FPD A determines that the communication device "appears" to be (i.e., could be) inside the geofenced area. In one embodiment, if all of the FPDs determine that the communication device appears to be inside the geofenced area, then it is declared that the communication is within the geofenced area. In another embodiment, if at least N-1 (where N=4 in this example) of the FPDs determine that the communication device appears to be inside the geofenced area, then it is declared that the communication is within the geofenced area.

As an example, consider communication device 377 that has been placed on table 390. In some embodiments, device 377 transmits an "access request." The access request may be broadcast so that it is received by all of the FPDs in the group or unicast to a specific one of the FPDs that device 377 discovered as a result of a discovery procedure. Regardless of how an FPD determines that device 377 has requested access, the FPD may in a following step initiate D2D SL beam refinement procedure and thereby obtain a refined beam index for device 377. For example, FPD A selects, based on a beam management procedure, a best beam to communicate with device 377 and this best beam has a beam index of Bix-3. Device 377 is not granted access until at least a certain number of the FPDs (e.g., 3 out of the 4 in this example) has determined that device 377 appears to be inside the geofenced area 399.

After the FPD has obtained the beam index, the FPD can translate the beam index to a vector space representation. Then, using the vector space representation (or a similar spatial representation), the FPD assess if device 377 is within the FPD's spanning area. If FDP determines that device 377 is within the FDP's spanning area, the FDP determines that device 377 could be within the geofenced area, whereas if the FPD determines that device 377 is not within the FDP's spanning area, then FDP determines that device 377 cannot be within the geofenced area. If the FPD determines that device 377 could be within the geofenced area, the FPD sets an "isInside" flag to TRUE, otherwise it sets the isInside flag to FALSE. Some number of the other FPDs in the group may perform the same process. Thus, at some point, some number of the FPDs in the group have set an isInside flag for device 377. If at least a certain number of the FPDs in the group (e.g., all of N of the FPS or at least N-1 of the FPDs) have set the isInside flag for device 377 to TRUE, then device 377 is considered to be inside the geofenced area.

Looking at FIG. 3, it is understood that device 377 will be considered inside the beam fencing domain for all FPDs A..D, but for device 378, on the other hand, it is likely that FPD C and D may derive device 378 as being "inside" but given that FPD A and FPD B both will deduce that device 378 is not inside their respective spanning areas, the FPG-consensus verdict is "not inside." Given that device 377 is considered inside, any of the FPDs in the group may provide to device 377 credentials for a geofence-related access.

In a further aspect, the geofencing system may have a means for detecting when an FPD has moved and/or when device 377 has moved. For example, an FPD may have a sensor (e.g., accelerometer, gyro, etc.) that detects movement of the FPD. When an FPD has determined that it or another FPD has moved, the FPD may re-activate the refined beam management fencing procedure to check/re-establish relevant fence positions given the device(s) new/altered spatial locations. Likewise, from a practical aspect, FPDs may periodically poll its related FPDs to check if previously identified fence-beams (borders) still are relevant; if not then further trigger re-establishment activities.

### 3. Aspects of initial D2D Tx power setting

In one embodiment, when an FPD attempts to establish a connection with another FPD in the group, the FPD initially uses a low SL Tx power setting, which power setting may be based on an estimated size of the geofenced area. For example, geofenced area may be classified into one of three sizes, such as: small (e.g., 1-5 m²), medium (e.g., 10-50 m²), or large (e.g., 50-100 m²); each size may have an associated initial power setting. In another embodiment, the initial power setting may be user-defined.

Starting the connection procedure from an initial low-power and increasing power only if necessary (e.g., when no (or too few) FPDs respond) is typically preferred because using less power typically results in fewer reflections, thereby improving the accuracy of the fence-pole directions compared to what a higher-power may render, particularly in a small room.

### 4. Camera-enabled further embodiment

In some embodiments, one or more of the FPDs may have a camera that is employed to improve, at the least, the initiation/setup phase of establishing the geofenced area. For example, assume that FPD A has a camera and a camera measurement application. When this camera measurement application is invoked, the application can employ the camera to determine the distances between FPD A and the other FPDS as well as the inherit angles of direction. Thus, the relative position between FPD A and the other devices are derived in terms of distance to individual devices as well as angles of direction. For an irregular quadrilateral, which in practice is the most plausible shape rendered by randomly placing four FPDs in a plane, following the law of Cosines and law of Sines, the distance between the other device-pairs can be derived (e.g., the distance between FPD B and FPD C and the distance between FPD B and FPD D).

Once these distances are obtained by FPD A, FPD A can derive a pathloss measure and a smallest useful power to be used for contacting other intended face-pole devices via D2D communication (e.g., for an over-table establishment in the order of meters requires another power setting than ~100 m associated with e.g. a fence-pole group initiated e.g. inside a stadium building). Additionally, FPD A may distribute the distance metric to the other FPDs in the FPG, from which other individual FPDs in the FPG in turn can derive their corresponding power settings to be used in D2D SL communications in their respective emerging communication activities.

After the initial power settings are determined, FPD A can then begin the process of establishing connections with the other FPDs, and, for each other FPD, selecting a best beam for the connection with the other FPD, and, thereby, a direction (e.g., angle) to the other FPD. In a further aspect of establishing the refined D2D connection (i.e., determining the best beam), an FPD may use the camera derived distance metric to double-check relevancy of established beam directions with respect to the camera measurements (e.g., that an angle determined from the camera measurements is consistent with the corresponding angle determined based on the beam selection). In another embodiment, the camera information can be used by an FPD to select a starting point for the refined beams that the FPD will test in its search for the best beam.

Once each FPD has established the directions (e.g., angles) to the other FPDs, then the FPG can be used to make a decision as to whether a communication is inside the geofenced area.

In a further aspect, FPDs could be automatically detected and recognized in the camera measurement application view using an existing object detection system running on the device. In another embodiment Bluetooth angle of arrival (AoA) and angle of departure (AoD) could be used by a device to find and position relevant devices in the area and mark all or a selected number of them as FPDs. A measurement metric may be conveyed between FPDs in a basic lookup table, as a computed hash or in other equivalent form, either compressed/uncompressed. The distance measure/metric may be expressed as a basic physical length measure, in equivalent radio measures such as pathloss (dBm) or estimated suitable SL Tx power.

### 5. Using Audio instead of Radio Beams

Instead of an FPD using a radio signal to establish a direction to another FPD, high-frequency audio signals can be used (e.g., specific frequency in different directions). A stereo speaker (which most modern smartphones have), may be used to create a sound source that outputs different frequencies in different directions; this, combined with the common multiple microphone arrays that many phones have, makes it possible to measure where the audio signal originates from (i.e., in the spatial aspect). Using a suitable number of frequency bands and directions, this can then be applied in the same way as the D2D SL direction identification as previously described. One difference is that these signals cannot be active all at the time since it will probably be very annoying for people who can hear the clean signals or perceive interaction tones. Either the method would demand an active activation of the audio output when a new device wants to join or it could have a set output pattern that minimizes disturbance. Or that the intended audio signal is generated in a frequency range where most people are less prone to hear it (e.g., at 15 kHz++ bands).

### 6. Other relevant use cases (e.g. aerials, vehicles, etc.)

Other possible use cases using the proposed geofencing system are also possible. For example, among a pre-defined group of vehicles (given an assumption of radio signal line-of-sight (LOS)), the interior area between the vehicles can be considered as the geofenced area and any device within that area with the right to request local access may be provided that based on its locality.

Another related scenario may emerge with aerials, where in a more plausible LoS scenario compared to earth-bound vehicles, may use the suggested approach to define an area (or more suitable in respect to flight altitude, an access volume inside which requesting devices may be granted access. Similarly, "aerials" aspect may be considered also for, for example, meeting room applications; with some of the intended FPDs located at different altitudes compared to its other FPDs will enable efficient spanning of a geofenced volume by use of same fence-pole beam techniques. In a similar manner, allowing table-located FPDs to sweep also "one beam-layer up" would provide a "buffer zone" for communication devices to move within - - i.e., in this case a typical approach may comprise to establish said in-plane geofence, but also allow communication devices inside the fence in-plane also now making use "one-refined beam layer up" from FPDs perspective.

Certain transport eco-system scenarios may also apply; given a sufficiently large vehicle (train, heavy-hauler truck, cargo ship, etc.), it may be useful to establish the (more or less temporary and user-driven) geo-fencing networks following said transport vehicles.

Also, applying a local geo-fence in a transport scenarios enables monitoring of goods and packets within said FPG and changes within the FPG, i.e. a sort of refined beam-based relative-other-packets-positioning tripwire. That is, a way to keep track of packets and goods during transport.

Another related application may be related to vehicle theft alarm; vehicles parked at some parking area may form a SL-beam-based beam-grid to "other vehicles" and actions being triggered as a beam-mesh-grid-interleaved vehicle is moved without, for example, geo-grid-beam functionality being properly deactivated (un-associated) by the authored user (i.e. vehicle owner) using, for example, a managing application. Such approach may be a very robust to tampering as external parties likely cannot know to what other vehicles a first vehicle has established its geo-fence beam grid.

### 7. Beamforming methods for D2D SL communications

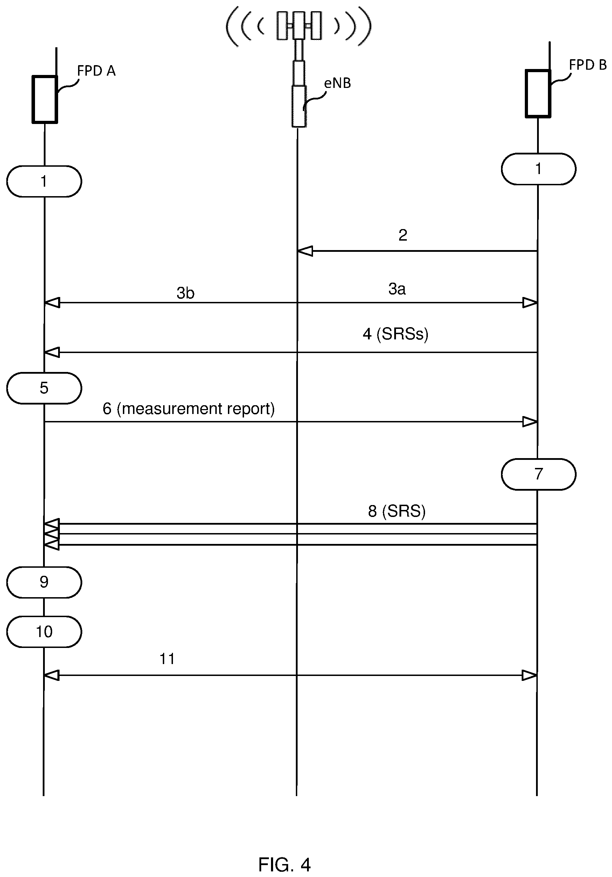

FIG. 4 illustrates a basic beam establishing procedure in which a pair of FPDs (e.g., FPD A and FPD B) arrange a SL transmission using beamforming. The steps shown in FIG. 4 are described below.

Steps 1-3: Same as described above with respect to FIG. 2.

Step 4: FPD B transmits UL SL sounding-reference-signals (SRSs) in some initial set of transmit (Tx) beams.

Step 5: Based on measurements (e.g. reference signal received power RSRP measurements) of the received SRSs, FPD A identifies the best Tx beam used by FPD B, and FPD A determines its own best corresponding receive (Rx) beam.

Step 6: FPD A transmits to FPD B a measurement report comprising information (e.g., RSRP measurements and corresponding beam identifiers) indicating the best Tx beam used by FPD B in step 4.

Step 7: FPD B processes the measurement report and selects a SL Tx beam according to the measurement report (e.g., FPD B selects the identified best Tx beam).

Step 8: FPD B repeatedly (in some relevant repetition scheme over time and beam grid) transmits UL SL SRS using the Tx beam selected in step 8.

Step 9: For each Rx beam included in in a set of candidate Rx beams, FPD A uses the Rx beam to measure one of the UL SL SRSs transmitted by FPD B in step 9; after looping through the candidate Rx beams, FPD A identifies its best Rx beam (e.g., the Rx beam that produced the highest RSRP value).

Step 10: FPD A assumes Rx/Tx beam correspondence from a SL perspective and selects best Rx beam's direction also to be used for SL Tx wide beam. That is, after determining its best Rx beam, FPD A assumes that its best Tx beam will correspond to (i.e., have the same direction as) its best Rx beam.

Step 11: At this point the D2D SL connection is established and the data setup procedures is executed accordingly.

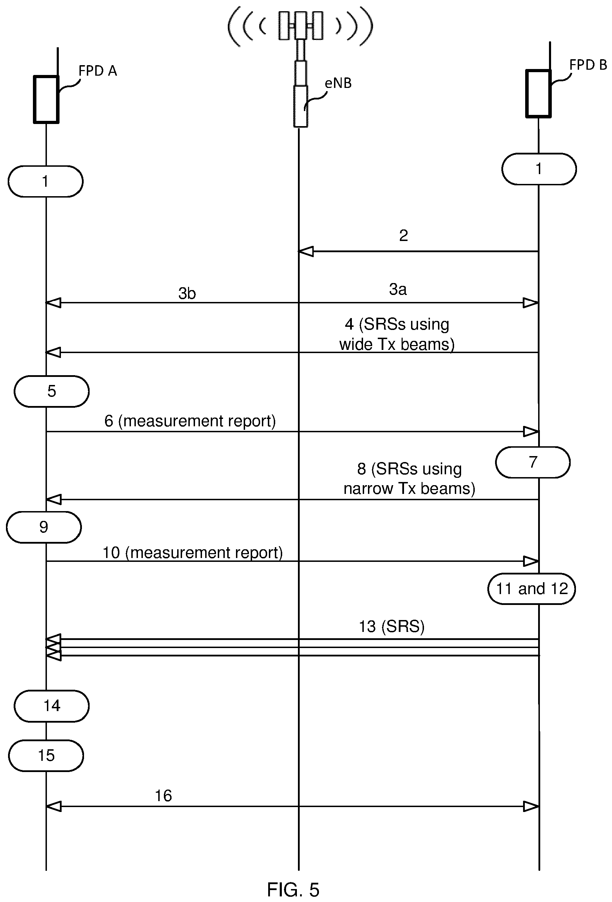

In a similar aspect, in addition to FPD B taking the communication initiative, FPD B also takes on the role as managing device during the beam setup procedure adopting the responsibility to transmit the (initial) set of wide beams, and subsequent narrow traffic beams. This embodiment is illustrated in FIG. 5. The steps shown in FIG. 5 are described below.

Steps 1-3: Same as described above with respect to FIG. 2.

Step 4: FPD B transmits UL SL SRSs in some initial set of wide FPD B Tx beams (i.e. takes the managing role in the beam management procedure).

Step 5: FPD A identifies best wide Tx beam from FPD B, and its own best corresponding Rx beam. For example, FPD B measures the SRS (e.g., RSRP) for each wide Tx beam and identifies the best wide Tx beam that was used by FPD A in step 4 (e.g., FPD B identifies the wide Tx beam having the highest corresponding RSPR value).

Step 6: FPD A transmits to FPD B a measurement report comprising information (e.g., RSRP measurements and corresponding beam identifiers) indicating the best wide Tx beam used by FPD B in step 4.

Step 7: FPD B processes the measurement report.

Step 8: FPD B schedules and transmits UL SL SRSs for a selected set of narrow beams within the scope/range of the wide Tx beam identified in the measurement report.

Step 9: FPD A detects and measures all UL SL SRS signal strength from FPD B's incoming narrow-beam SL transmission.

Step 10: FPD A transmits to FPD B a second measurement report comprising information (e.g., RSRP measurements) indicating the best narrow Tx beam that used in step 8 to transmit the UL SL SRSs.

Step 11: FPD B processes the second measurement report.

Step 12: FPD B select a SL narrow Tx beam based on the second measurement report (e.g., FPD B selects the identified best narrow Tx beam).

Step 13: FPD B repeatedly (in some relevant repetition scheme over time and "beam grid") transmits UL SL SRS using the selected the SL narrow Tx beam.

Step 14: For each Rx beam included in in a set of candidate Rx beams, FPD A uses the Rx beam to measure one of the UL SL SRSs transmitted by FPD B in step 13; after looping through the candidate Rx beams, FPD A identifies its best Rx beam (e.g., the Rx beam that produced the highest RSRP value).

Step 15: FPD A assumes Rx/Tx beam correspondence from a SL perspective and selects best Rx beam's direction also to be used for SL Tx wide beam. That is, after determining its best Rx beam, FPD A assumes that its best Tx beam will correspond to (i.e., have the same direction as) its best Rx beam.

Step 16: At this point the D2D SL connection is established and the data setup procedures is executed accordingly.

In other scenarios where some devices are less capable than others (in terms of beam forming capabilities), it will be plausible that a less capable device (e.g. FPD B) requests a connection with some more capable one; in that procedure it would be beneficial if said devices considered a negotiating phase where respective devices beam management capabilities were compared and used to accomplish a more optimal communication setup.

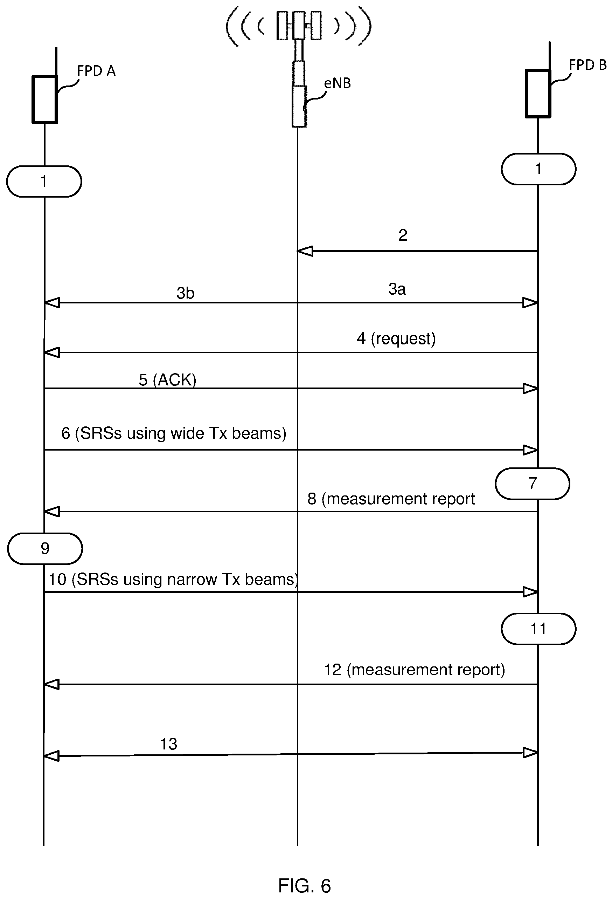

Thus, in the scenario where FPD B might not hold relevant beamforming capabilities (e.g. only having one omni Rx/Tx antenna), said role to act as the controlling/managing device in terms of beam management actions is preferably taken by the (potentially) more capable device (e.g., FPD A). Typically, in the beam setup procedure, that FPD A transmits (initial) set of wide beams. This beam management procedure is illustrated in FIG. 6, where FPD B requests FPD A to take on the controlling beam management-hosting functionality. The steps shown in FIG. 6 are described below.

Steps 1-3: Same as described above with respect to FIG. 2.

Step 4: FPD B sends to FPD A a request indicating that FPD B lacks beam management capabilities and requesting that FPD A take control of the beam management procedure.

Step 5: FPD A sends to FPD B a response to the request (e.g., a positive acknowledgement (ACK) or a negative ACK (NACK)). If FPD A sends a NACK in response to the request, then no beam management procedure is performed. In some embodiments, if said SL-beam requirement is deemed mandatory for intended communication purpose and FPD A sends a NACK, then D2D connection is terminated, otherwise, if FPD A sent the NACK but SL-beams are not deemed mandatory, then the connection procedure can continue using a legacy procedure. If, however, FPD A sent an ACK, then the process goes to step 6.

Step 6: FPD A assumes a managing role in the communication and transmits UL SL SRSs in some initial set of wide-beams Tx beams.

Step 7: FPD B measures the SRS (e.g., RSRP) for each wide Tx beam and identifies the best wide Tx beam that was used by FPD A in step 6 (e.g., FPD B identifies the wide Tx beam having the highest corresponding RSPR value).

Step 8: FPD B transmits to FPD A a measurement report comprising information (e.g., RSRP measurements and corresponding beam identifiers) indicating the best wide Tx beam that used in step 6 to transmit the UL SL SRSs.

Step 9: FPD A processes the measurement report.

Step 10: FPD A schedules and transmits UL SL SRSs for a selected set of narrow beams within the scope/range of the wide Tx beam identified in the measurement report.

Step 11: FPD B measures the SRS (e.g., RSRP) for each narrow Tx beam and identifies the best narrow Tx beam that was used by FPD A in step 10 (e.g., FPD B identifies the narrow Tx beam having the highest corresponding RSPR value).

Step 12: FPD B transmits to FPD A a second measurement report comprising information (e.g., RSRP measurements) indicating the best narrow Tx beam that used in step 10 to transmit the UL SL SRSs.

Step 13: At this point the D2D SL connection is established and the data setup procedures is executed accordingly.

In a further aspect of the above scenario, FPD A might also have the capability to use a more refined beam management setup with more narrow traffic beams; then steps 8-12 in the prerequisite description (i.e. transmission/reporting of narrow beams) are typically invoked.

In a yet further improving steps where the announcing UE asks for beam management support from monitoring/responding UEs, the request step could be further elaborated including specific capabilities of any of the communication parties.

Such a beam management capability request may furthermore comprise information on: i) specific antenna directions (more specifically individual beam directions) in respect to requesting/responding vehicles' travel directions, e.g. that beam directions are requested forward/backwards in relation to vehicles travel direction (and/or in relation to surrounding environments, e.g. open areas, street canyons, road tunnels, etc.); ii) Specific antenna height; e.g. that one vehicle knows its currently low operational height, and that any communication party preferably is located at a certain altitude; iii) Where directions could include either wide beams or further refined narrow beams; iv) Etc.

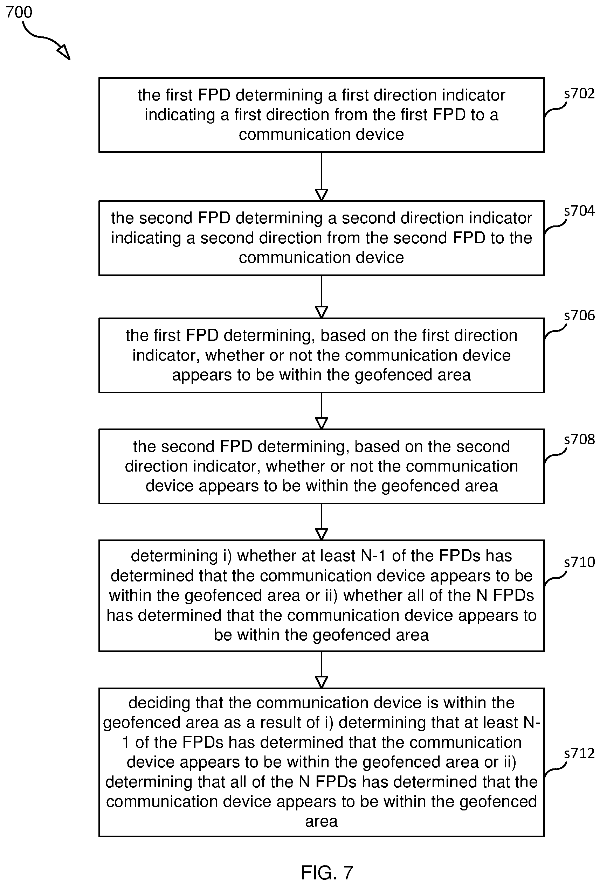

FIG. 7 is a flowchart illustrating a process 700, according to an embodiment, for geofencing, wherein a geofenced area 399 is defined by a set of N FPDs (e.g., FPD A, FPD B, FPD C, FPD D) where N is greater than or equal to 2 such that the set of N FPDs comprises at least a first FPD (e.g., FPD A) and a second FPD (e.g., FPD B). Process 700 may being in step s702. Step s702 comprises the first FPD determining a first direction indicator indicating a first direction from the first FPD to a communication device (e.g., UE 377). Step s704 comprises the second FPD determining a second direction indicator indicating a second direction from the second FPD to the communication device. Step s706 comprises the first FPD determining, based on the first direction indicator, whether or not the communication device appears to be within the geofenced area. Step s708 comprises the second FPD determining, based on the second direction indicator, whether or not the communication device appears to within the geofenced area. Step s710 comprises determining i) whether at least N-1 of the FPDs has determined that the communication device appears to be within the geofenced area or ii) whether all of the N FPDs has determined that the communication device appears to be within the geofenced area. Step s712 comprises deciding that the communication device is within the geofenced area as a result of i) determining that at least N-1 of the FPDs has determined that the communication device appears to be within the geofenced area or ii) determining that all of the N FPDs has determined that the communication device appears to be within the geofenced area.

In some embodiments, the first direction indicator determined by the first FPD is a first angle from a first reference direction determined by the first FPD; and the second direction indicator determined by the second FPD is a second angle from a second reference direction determined by the second FPD.

In some embodiments, the set of N FPDs further comprises a third FPD (e.g., FPD C), and the process further comprises: the first FPD determining a third direction indicator indicating a direction from the first FPD to the second FPD; and the first FPD determining a fourth direction indicator indicating a direction from the first FPD to the third FPD, wherein the step of the first FPD determining, based on the first direction indicator, whether or not the communication device appears to be within the geofenced area comprises: the first FPD determining whether the first direction is between i) the direction from the first FPD to the second FPD and ii) the direction from the first FPD to the third FPD. In some embodiments, the third direction indicator is an angle from the first reference direction, and the fourth direction indicator is an angle from the first reference direction.

In some embodiments, the first FPD determining, based on the first direction indicator, whether or not the communication device appears to be within the geofenced area comprises the first FPD determining, based on the first direction indicator, whether or not the communication device is within a spanning area defined by the first FPD, and the first FPD determines that the communication device appears to be within the geofenced area as a result of determining that the communication device is within the first FPD's spanning area.

In some embodiments process 700 further includes the first FPD determining a third direction indicator indicating a direction from the first FPD to the second FPD, wherein the first FPD determines whether or not the communication device appears to be within the geofenced area based on the first direction indicator and the third direction indicator. In some embodiments, the first FPD determines the third direction indicator by performing a beam management process with the second FPD. In some embodiments, the third direction indicator is a beam index of a selected beam that was selected as a result of performing the beam management process.

In some embodiments, performing the beam management process comprises: the first FPD transmitting sounding reference signals, SRSs, to the second FPD using a set of transmit, Tx, beams and receiving from the second FPD a measurement report comprising information identifying a best Tx beam from the set of Tx beams, wherein the selected beam is the identified best Tx beam, or for each receive, Rx, beam included in a set of candidate Rx beams, the first FPD using the Rx beam to measure a SRS transmitted by the second FPD, and, based on the SRS measurements, selecting a best Rx beam from the set of candidate Rx beams, wherein the selected beam is the selected best Rx beam.

In one embodiment, geofencing system 310 is adapted to perform process 700.

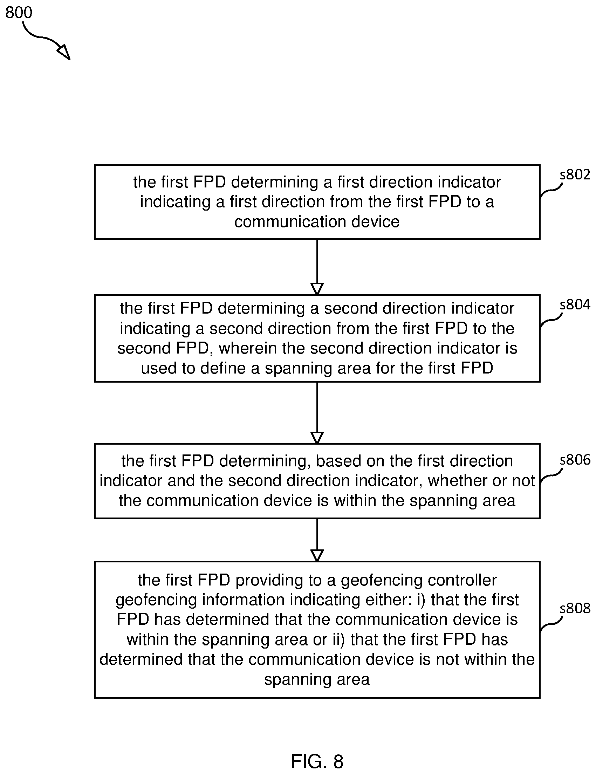

FIG. 8 is a flowchart illustrating a process 800, according to an embodiment, for geofencing, wherein a geofenced area 399 is defined by a set of N FPDs (e.g., FPD A, FPD B, FPD C, FPD D) where N is greater than or equal to 2 such that the set of N FPDs comprises at least a first FPD (e.g., FPD A) and a second FPD (e.g., FPD B). Process 800 may being in step s802. Step s802 comprises the first FPD determining a first direction indicator indicating a first direction from the first FPD to a communication device. Step s804 comprises the first FPD determining a second direction indicator indicating a second direction from the first FPD to the second FPD, wherein the second direction indicator is used to define a spanning area for the first FPD. Step s806 comprises the first FPD determining, based on the first direction indicator and the second direction indicator, whether or not the communication device is within the spanning area. Step s808 comprises the first FPD providing to a geofencing controller geofencing information indicating either: i) that the first FPD has determined that the communication device is within the spanning area or ii) that the first FPD has determined that the communication device is not within the spanning area.

In some embodiments, the set of N FPDs further comprises a third FPD (e.g., FPD B), and the process further comprises: the first FPD determining a third direction indicator indicating a direction from the first FPD to the third FPD, wherein the step of the first FPD determining, based on the first direction indicator, whether or not the communication device is within the spanning area comprises the first FPD determining whether the first direction is between: i) the direction from the first FPD to the second FPD and ii) the direction from the first FPD to the third FPD.

In some embodiments, the first FPD determines the second direction indicator by performing a beam management process with the second FPD.

In some embodiments, the second direction indicator is a beam index of a selected beam that was selected as a result of performing the beam management process.

In some embodiments, performing the beam management process comprises: the first FPD transmitting sounding reference signals, SRSs, to the second FPD using a set of transmit, Tx, beams and receiving from the second FPD a measurement report comprising information identifying a best Tx beam from the set of Tx beams, wherein the selected beam is the identified best Tx beam, or for each receive, Rx, beam included in a set of candidate Rx beams, the first FPD using the Rx beam to measure a SRS transmitted by the second FPD, and, based on the SRS measurements, selecting a best Rx beam from the set of candidate Rx beams, wherein the selected beam is the selected best Rx beam.

In some embodiments, the first FPD comprises an image sensor, and the process 700 or 800 further comprises: the first FPD using the image sensor to determine a distance between the first FPD and the second FPD; and the first FPD using the determined distance to select a transmit power for use in establishing a device-to-device, D2D, sidelink, SL, connection with the second FPD.

In any one of the above embodiments, the first FPD may be a smartphone comprising a geofencing application (GFA).

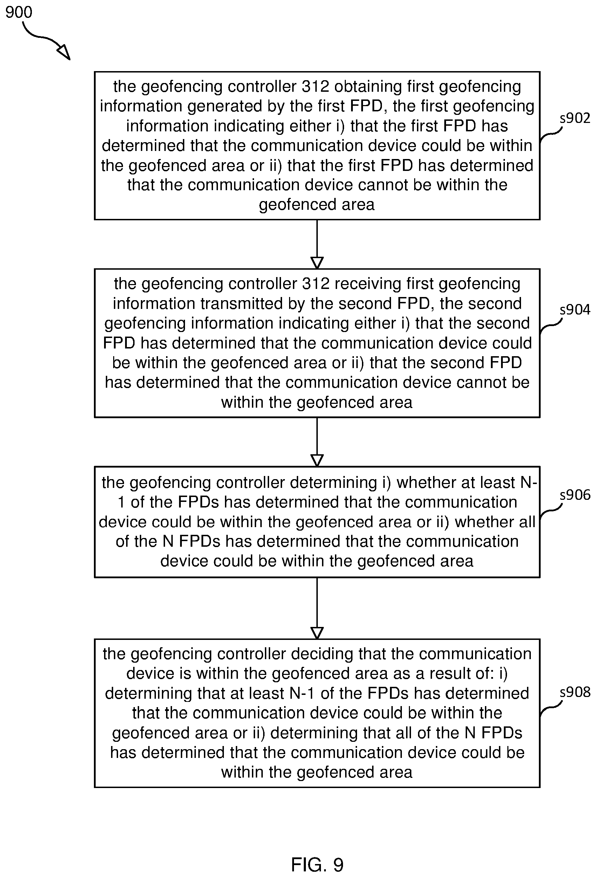

FIG. 9 is a flowchart illustrating a process 900, according to an embodiment, for determining whether or not a communication device is within a geofenced area defined by a set of N FPDs, where N is greater than or equal to 2 such that the set of N FPDs comprises at least a first FPD (e.g., FPD A) and a second FPD (e.g., FPD B). Process 900 may being in step s902. Step s902 comprises the geofencing controller 312 obtaining first geofencing information generated by the first FPD, the first geofencing information indicating either i) that the first FPD has determined that the communication device could be within the geofenced area or ii) that the first FPD has determined that the communication device cannot be within the geofenced area. Step s904 comprises the geofencing controller 312 receiving first geofencing information transmitted by the second FPD, the second geofencing information indicating either i) that the second FPD has determined that the communication device could be within the geofenced area or ii) that the second FPD has determined that the communication device cannot be within the geofenced area. Step s906 comprises the geofencing controller determining i) whether at least N-1 of the FPDs has determined that the communication device could be within the geofenced area or ii) whether all of the N FPDs has determined that the communication device could be within the geofenced area. Step s908 comprises the geofencing controller deciding that the communication device is within the geofenced area as a result of: i) determining that at least N-1 of the FPDs has determined that the communication device could be within the geofenced area or ii) determining that all of the N FPDs has determined that the communication device could be within the geofenced area. In some embodiments, the geofencing controller is a component of the first FPD. In some embodiments, the geofencing controller is remote from both the first FPD and the second FPD.

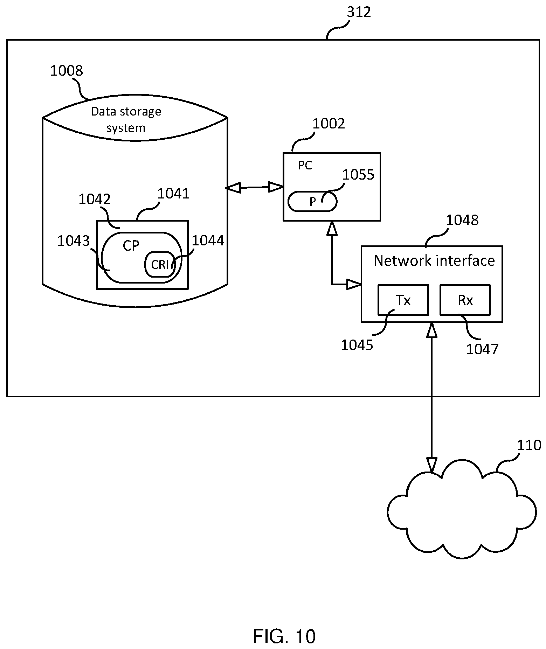

FIG. 10 is a block diagram of geofencing controller 312, according to some embodiments. As shown in FIG. 10, geofencing controller 312 may comprise: processing circuitry (PC) 1002, which may include one or more processors (P) 1055 (e.g., a general purpose microprocessor and/or one or more other processors, such as an application specific integrated circuit (ASIC), field-programmable gate arrays (FPGAs), and the like), which processors may be co-located in a single housing or in a single data center or may be geographically distributed (i.e., geofencing controller 312 may be a distributed computing apparatus); at least one network interface 1048 comprising a transmitter (Tx) 1045 and a receiver (Rx) 1047 for enabling geofencing controller 312 to transmit data to and receive data from other nodes connected to a network 110 (e.g., an Internet Protocol (IP) network) to which network interface 1048 is connected (directly or indirectly) (e.g., network interface 1048 may be wirelessly connected to the network 110, in which case network interface 1048 is connected to an antenna arrangement); and a storage unit (a.k.a., "data storage system") 1008, which may include one or more non-volatile storage devices and/or one or more volatile storage devices. In embodiments where PC 1002 includes a programmable processor, a computer program product (CPP) 1041 may be provided. CPP 1041 includes a computer readable medium (CRM) 1042 storing a computer program (CP) 1043 comprising computer readable instructions (CRI) 1044. CRM 1042 may be a non-transitory computer readable medium, such as, magnetic media (e.g., a hard disk), optical media, memory devices (e.g., random access memory, flash memory), and the like. In some embodiments, the CRI 1044 of computer program 1043 is configured such that when executed by PC 1002, the CRI causes geofencing controller 312 to perform steps described herein (e.g., steps described herein with reference to the flow charts). In other embodiments, geofencing controller 312 may be configured to perform steps described herein without the need for code. That is, for example, PC 1002 may consist merely of one or more ASICs. Hence, the features of the embodiments described herein may be implemented in hardware and/or software.

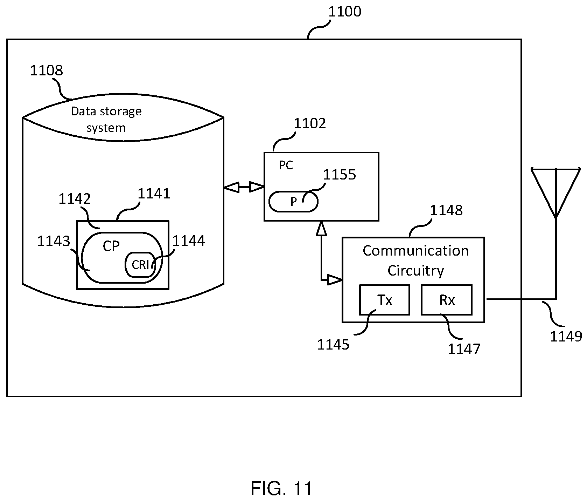

FIG. 11 is a block diagram of an FPD 1100, according to some embodiments, which can be used to implement any one of the FPDs described herein. As shown in FIG. 11, FPD 1100 may comprise: processing circuitry (PC) 1102, which may include one or more processors (P) 1155 (e.g., one or more general purpose microprocessors and/or one or more other processors, such as an application specific integrated circuit (ASIC), field-programmable gate arrays (FPGAs), and the like); communication circuitry 1148, which is coupled to an antenna arrangement 1149 comprising one or more antennas and which comprises a transmitter (Tx) 1145 and a receiver (Rx) 1147 for enabling FPD 1100 to transmit data and receive data (e.g., wirelessly transmit/receive data); and a local storage unit (a.k.a., "data storage system") 1108, which may include one or more non-volatile storage devices and/or one or more volatile storage devices. In embodiments where PC 1102 includes a programmable processor, a computer program product (CPP) 1141 may be provided. CPP 1141 includes a computer readable medium (CRM) 1142 storing a computer program (CP) 1143 comprising computer readable instructions (CRI) 1144. CRM 1142 may be a non-transitory computer readable medium, such as, magnetic media (e.g., a hard disk), optical media, memory devices (e.g., random access memory, flash memory), and the like. In some embodiments, the CRI 1144 of computer program 1143 is configured such that when executed by PC 1102, the CRI causes FPD 1100 to perform steps described herein (e.g., steps described herein with reference to the flow charts). In other embodiments, FPD 1100 may be configured to perform steps described herein without the need for code. That is, for example, PC 1102 may consist merely of one or more ASICs. Hence, the features of the embodiments described herein may be implemented in hardware and/or software.

While various embodiments are described herein, it should be understood that they have been presented by way of example only, and not limitation. Thus, the breadth and scope of this disclosure should not be limited by any of the above-described exemplary embodiments. Moreover, any combination of the above-described elements in all possible variations thereof is encompassed by the disclosure unless otherwise indicated herein or otherwise clearly contradicted by context.

Additionally, while the processes described above and illustrated in the drawings are shown as a sequence of steps, this was done solely for the sake of illustration. Accordingly, it is contemplated that some steps may be added, some steps may be omitted, the order of the steps may be re-arranged, and some steps may be performed in parallel.

### Abbreviations

- AoA: Angle of Arrival
- AoD: Angle of Departure
- Bix: Beam Index
- D2D: Device to Device
- eNB: Evolved Node B (a.k.a. base station)
- FPD: Fence-pole Device
- FPG: Fence-pole Group
- GNSS: Global Navigation Satellite System
- GPS: Global Positioning System
- GUI: Graphical user interface
- LoS: Line of Sight
- ND: New Device
- PC5: D2D interface
- PL: Pathloss
- SL: SideLink
- Tx: Transmit

## Claims

1. A method (800) for geofencing in a geofenced area (399), wherein the geofenced area (399) is defined by a set of N fence-pole devices, FPDs, where N is greater than or equal to 3 such that the set of N FPDs comprises at least a first FPD (FPD A) a second FPD (FPD B) and a third FPD (FPD C), the method being performed by the first FPD and comprising:
the first FPD determining a first direction indicator indicating a first direction from the first FPD to a communication device;
the first FPD determining a second direction indicator indicating a second direction from the first FPD to the second FPD, wherein the second direction indicator is used to define a spanning area for the first FPD;
the first FPD determining, based on the first direction indicator and the second direction indicator, whether or not the communication device is within the spanning area;
the first FPD determining a third direction indicator indicating a direction from the first FPD to the third FPD, wherein the step of the first FPD determining, based on the first direction indicator, whether or not the communication device is within the spanning area comprises the first FPD determining whether the first direction is between: i) the direction from the first FPD to the second FPD and ii) the direction from the first FPD to the third FPD,_and
the first FPD determining that either: i) the communication device is within the spanning area or ii) the communication device is not within the spanning area.

2. The method of claim 1, wherein the first FPD determines the second direction indicator by performing a beam management process with the second FPD.

3. The method of claim 2, wherein the second direction indicator is a beam index of a selected beam that was selected as a result of performing the beam management process.

4. The method of any of claims 1-3, wherein performing the beam management process comprises:
the first FPD transmitting sounding reference signals, SRSs, to the second FPD using a set of transmit, Tx, beams and receiving from the second FPD a measurement report comprising information identifying a best Tx beam from the set of Tx beams, wherein the selected beam is the identified best Tx beam, or
for each receive, Rx, beam included in a set of candidate Rx beams, the first FPD using the Rx beam to measure a SRS transmitted by the second FPD, and, based on the SRS measurements, selecting a best Rx beam from the set of candidate Rx beams, wherein the selected beam is the selected best Rx beam.

5. The method of any one of claims 1-4, wherein
the first FPD comprises an image sensor, and
the method further comprises:
the first FPD using the image sensor to determine a distance between the first FPD and the second FPD; and
the first FPD using the determined distance to select a transmit power for use in establishing a device-to-device, D2D, sidelink, SL, connection with the second FPD.

6. The method of any one of claims 1-5, wherein the first FPD is a smartphone comprising a geofencing application, GFA.

7. A computer program (1143) comprising instructions (1144) which when executed by processing circuitry (1102) of a fence-pole device, FPD (FPD A), causes the FPD to perform the method of any one of claims 1-6.

8. A carrier containing the computer program of claim 7, wherein the carrier is one of an electronic signal, an optical signal, a radio signal, and a computer readable storage medium (1142).

9. A first fence-pole device (FPD A) for geofencing in a geofenced area (399), defined by a set of N fence-pole devices, FPDs, where N is greater than or equal to 3 such that the set of N FPDs comprises at least the first FPD (FPD A) a second FPD (FPD B) and a third FPD (FPD C), the first FPD comprising processing circuitry configured to:
determining a first direction indicator indicating a first direction from the first FPD to a communication device;
determining a second direction indicator indicating a second direction from the first FPD to the second FPD, wherein the second direction indicator is used to define a spanning area for the first FPD;
determining, based on the first direction indicator and the second direction indicator, whether or not the communication device is within the spanning area;
determining a third direction indicator indicating a direction from the first FPD to the third FPD, wherein the determining, based on the first direction indicator, whether or not the communication device is within the spanning area comprises determining whether the first direction is between: i) the direction from the first FPD to the second FPD and ii) the direction from the first FPD to the third FPD, and
determining that either: i) the communication device is within the spanning area or ii) the communication device is not within the spanning area.

10. The first FPD of claim 9, further configured to determine the second direction indicator by performing a beam management process with the second FPD.

11. The first FPD of claim 9 or 10, further configured to select the second direction indicator as a result of performing the beam management process, wherein the second direction indicator is a beam index of a selected beam.

12. The first FPD of any of claims 9-11, wherein the first FPD is configured to perform the beam management process by:
transmitting sounding reference signals, SRSs, to the second FPD using a set of transmit, Tx, beams and receiving from the second FPD a measurement report comprising information identifying a best Tx beam from the set of Tx beams, wherein the selected beam is the identified best Tx beam, or
for each receive, Rx, beam included in a set of candidate Rx beams, using the Rx beam to measure a SRS transmitted by the second FPD, and, based on the SRS measurements, selecting a best Rx beam from the set of candidate Rx beams, wherein the selected beam is the selected best Rx beam.

13. The first FPD of any one of claims 9-12, wherein
the first FPD comprises an image sensor, and further configured to:
using the image sensor to determine a distance between the first FPD and the second FPD; and
the first FPD using the determined distance to select a transmit power for use in establishing a device-to-device, D2D, sidelink, SL, connection with the second FPD.

14. The first FPD of any one of claims 9-13, wherein the first FPD is a smartphone.

## Patentansprüche

1. Verfahren (800) für Geofencing in einem Geofence-Bereich (399), wobei der Geofence-Bereich (399) durch einen Satz von N Fence-Pole-Vorrichtungen, FPDs, definiert ist, wobei N größer oder gleich 3 ist, sodass der Satz von N FPDs mindestens eine erste FPD (FPD A), eine zweite FPD (FPD B) und eine dritte FPD (FPD C) umfasst, wobei das Verfahren von der ersten FPD durchgeführt wird und umfasst, dass:
die erste FPD einen ersten Richtungsindikator bestimmt, der eine erste Richtung von der ersten FPD zu einer Kommunikationsvorrichtung anzeigt;
die erste FPD einen zweiten Richtungsindikator bestimmt, der eine zweite Richtung von der ersten FPD zu der zweiten FPD anzeigt, wobei der zweite Richtungsindikator verwendet wird, um einen Überbrückungsbereich für die erste FPD zu definieren;
die erste FPD basierend auf dem ersten Richtungsindikator und dem zweiten Richtungsindikator bestimmt, ob sich die Kommunikationsvorrichtung innerhalb des Überbrückungsbereichs befindet oder nicht;
die erste FPD einen dritten Richtungsindikator bestimmt, der eine Richtung von der ersten FPD zu der dritten FPD anzeigt, wobei der Schritt durch die erste FPD zum Bestimmen basierend auf dem ersten Richtungsindikator, ob sich die Kommunikationsvorrichtung innerhalb des Überbrückungsbereichs befindet oder nicht, umfasst, dass die erste FPD bestimmt, ob die erste Richtung zwischen i) der Richtung von der ersten FPD zu der zweiten FPD und ii) die Richtung von der ersten FPD zu der dritten FPD ist, und
die erste FPD bestimmt, dass entweder i) die Kommunikationsvorrichtung sich innerhalb des Überbrückungsbereichs befindet oder ii) die Kommunikationsvorrichtung sich nicht innerhalb des Überbrückungsbereichs befindet.

2. Verfahren nach Anspruch 1, wobei die erste FPD den zweiten Richtungsindikator durch Durchführen eines Strahlverwaltungsprozesses mit der zweiten FPD bestimmt.

3. Verfahren nach Anspruch 2, wobei der zweite Richtungsindikator ein Strahlindex eines ausgewählten Strahls ist, der als Ergebnis des Durchführens des Strahlverwaltungsprozesses ausgewählt wurde.

4. Verfahren nach einem der Ansprüche 1-3, wobei das Durchführen des Strahlverwaltungsprozesses ferner umfasst, dass:
die erste FPD Sondierungsreferenzsignale, SRSs, unter Verwendung eines Satzes von Sendestrahlen, Tx-Strahlen, an die zweite FPD sendet und einen Messbericht, der Informationen umfasst, die einen besten Tx-Strahl aus dem Satz von Tx-Strahlen identifizieren, von der zweiten FPD empfängt, wobei der ausgewählte Strahl der identifizierte beste Tx-Strahl ist, oder
die erste FPD für jeden Empfangsstrahl, Rx-Strahl, der in einem Satz von Kandidaten-Rx-Strahlen umfasst ist, den Rx-Strahl zum Messen eines von der zweiten FPD gesendeten SRS verwendet und basierend auf den SRS-Messungen einen besten Rx-Strahl aus dem Satz von Kandidaten-RX-Strahlen auswählt, wobei der ausgewählte Strahl der ausgewählte beste Rx-Strahl ist.

5. Verfahren nach einem der Ansprüche 1-4, wobei
die erste FPD einen Bildsensor umfasst und
das Verfahren ferner umfasst, dass:
die erste FPD den Bildsensor zum Bestimmen eines Abstands zwischen der ersten FPD und der zweiten FPD verwendet; und
die erste FPD den bestimmten Abstand zum Auswählen einer Sendeleistung zur Verwendung beim Herstellen einer Sidelink-Verbindung, SL-Verbindung, von Vorrichtung zu Vorrichtung, D2D, mit der zweiten FPD verwendet.

6. Verfahren nach einem der Ansprüche 1-5, wobei die erste FPD ein Smartphone ist, die eine Geofencing-Anwendung, GFA, umfasst.

7. Computerprogramm (1143), umfassend Anweisungen (1144), die bei Ausführung durch Verarbeitungsschaltungsanordnung (1102) einer Fence-Pole-Vorrichtung, FPD (FPD A), die FPD zum Durchführen des Verfahrens nach einem der Ansprüche 1-6 veranlassen.

8. Datenträger, der das Computerprogramm nach Anspruch 7 enthält, wobei der Datenträger eines von einem elektronischen Signal, einem optischen Signal, einem Funksignal und einem computerlesbaren Speichermedium (1142) ist.

9. Erste Fence-Pole-Vorrichtung (FPD A) für Geofencing in einem Geofence-Bereich (399), der durch einen Satz von N Fence-Pole-Vorrichtungen, FPDs, definiert ist, wobei N größer oder gleich 3 ist, sodass der Satz von N FPDs mindestens eine erste FPD (FPD A), eine zweite FPD (FPD B) und eine dritte FPD (FPD C) umfasst, wobei die erste FPD Verarbeitungsschaltungsanordnung umfasst, die zu Folgendem konfiguriert ist:
Bestimmen eines ersten Richtungsindikators, der eine erste Richtung von der ersten FPD zu einer Kommunikationsvorrichtung anzeigt;
Bestimmen eines zweiten Richtungsindikators, der eine zweite Richtung von der ersten FPD zu der zweiten FPD anzeigt, wobei der zweite Richtungsindikator verwendet wird, um einen Überbrückungsbereich für die erste FPD zu definieren;
Bestimmen basierend auf dem ersten Richtungsindikator und dem zweiten Richtungsindikator, ob sich die Kommunikationsvorrichtung innerhalb des Überbrückungsbereichs befindet oder nicht;
Bestimmen eines dritten Richtungsindikators, der eine Richtung von der ersten FPD zu der dritten FPD anzeigt, wobei der Schritt zum Bestimmen basierend auf dem ersten Richtungsindikator, ob sich die Kommunikationsvorrichtung innerhalb des Überbrückungsbereichs befindet oder nicht, Bestimmen umfasst, ob die erste Richtung zwischen i) der Richtung von der ersten FPD zu der zweiten FPD und ii) die Richtung von der ersten FPD zu der dritten FPD ist, und
Bestimmen, dass entweder i) die Kommunikationsvorrichtung sich innerhalb des Überbrückungsbereichs befindet oder ii) die Kommunikationsvorrichtung sich nicht innerhalb des Überbrückungsbereichs befindet.

10. Erste FPD nach Anspruch 9, ferner konfiguriert zum Bestimmen des zweiten Richtungsindikators durch Durchführen eines Strahlverwaltungsprozesses mit der zweiten FPD.

11. Erste FPD nach Anspruch 9 oder 10, ferner konfiguriert zum Auswählen eines zweiten Richtungsindikators als Ergebnis des Durchführens eines Strahlverwaltungsprozesses, wobei der zweite Richtungsindikator ein Strahlindex eines ausgewählten Strahls ist.

12. Erste FPD nach einem der Ansprüche 9-11, wobei die erste FPD dazu konfiguriert ist, den Strahlverwaltungsprozess durch Folgendes durchzuführen:
Senden von Sondierungsreferenzsignalen, SRSs, an die zweite FPD unter Verwendung eines Satzes von Sendestrahlen, Tx-Strahlen, und Empfangen eines Messberichts von der zweiten FPD, der Informationen umfasst, die einen besten Tx-Strahl aus dem Satz von Tx-Strahlen identifizieren, wobei der ausgewählte Strahl der identifizierte beste Tx-Strahl ist, oder
Verwenden des Rx-Strahls für jeden Empfangsstrahl, Rx-Strahl, der in einem Satz von Kandidaten-Rx-Strahlen umfasst ist, zum Messen eines von der zweiten FPD gesendeten SRS und Auswählen eines besten Rx-Strahls aus dem Satz von Kandidaten-RX-Strahlen basierend auf den SRS-Messungen, wobei der ausgewählte Strahl der ausgewählte beste Rx-Strahl ist.

13. Erste FPD nach einem der Ansprüche 9-12, wobei
die erste FPD einen Bildsensor umfasst und ferner zu Folgendem konfiguriert ist:
Verwenden des Bildsensors zum Bestimmen eines Abstands zwischen der ersten FPD und der zweiten FPD; und
die erste FPD den bestimmten Abstand zum Auswählen einer Sendeleistung zur Verwendung beim Herstellen einer Sidelink-Verbindung, SL-Verbindung, von Vorrichtung zu Vorrichtung, D2D, mit der zweiten FPD verwendet.

14. Erste FPD nach einem der Ansprüche 9-13, wobei die erste FPD ein Smartphone ist.

## Revendications

1. Procédé (800) de géorepérage dans une zone géorepérée (399), dans lequel la zone géorepérée (399) est définie par un ensemble de N dispositifs de poteaux de clôture, FPD, où N est supérieur ou égal à 3 de sorte que l'ensemble de N FPD comprenne au moins un premier FPD (FPD A), un deuxième FPD (FPD B) et un troisième FPD (FPD C), le procédé étant réalisé par le premier FPD et comprenant :
par le premier FPD, la détermination d'un premier indicateur de direction indiquant une première direction depuis le premier FPD vers un dispositif de communication ;
par le premier FPD, la détermination d'un deuxième indicateur de direction indiquant une deuxième direction depuis le premier FPD vers le deuxième FPD, dans lequel le deuxième indicateur de direction est utilisé pour définir une zone de couverture pour le premier FPD ;
par le premier FPD, la détermination, sur la base du premier indicateur de direction et du deuxième indicateur de direction, si le dispositif de communication est ou non dans la zone de couverture ;
par le premier FPD, la détermination d'un troisième indicateur de direction indiquant une direction depuis le premier FPD vers le troisième FPD, dans lequel l'étape de détermination, par le premier FPD, sur la base du premier indicateur de direction, si le dispositif de communication est ou non à l'intérieur de la zone de couverture comprend la détermination, par le premier FPD, si la première direction est entre : i) la direction depuis le premier FPD vers le deuxième FPD et ii) la direction depuis le premier FPD vers le troisième FPD, et
par le premier FPD, la détermination que : soit i) le dispositif de communication est à l'intérieur de la zone de couverture, soit ii) le dispositif de communication n'est pas l'intérieur de la zone de couverture.

2. Procédé selon la revendication 1, dans lequel le premier FPD détermine le deuxième indicateur de direction en réalisant un processus de gestion de faisceau avec le deuxième FPD.

3. Procédé selon la revendication 2, dans lequel le deuxième indicateur de direction est un indice de faisceau d'un faisceau sélectionné qui a été sélectionné du fait de la réalisation du processus de gestion de faisceau.

4. Procédé selon l'une quelconque des revendications 1 à 3, dans lequel la réalisation du processus de gestion de faisceau comprend :
par le premier FPD, la transmission de signaux de référence de sondage, SRS, au deuxième FPD à l'aide d'un ensemble de faisceaux de transmission, Tx, et la réception, depuis le deuxième FPD, d'un rapport de mesure comprenant des informations identifiant le meilleur faisceau Tx parmi l'ensemble de faisceaux Tx, dans lequel le faisceau sélectionné est le meilleur faisceau Tx identifié, ou
pour chaque faisceau de réception, Rx, inclus dans un ensemble de faisceaux Rx candidats, l'utilisation, par le premier FPD, du faisceau Rx pour mesurer un SRS transmis par le deuxième FPD et, sur la base des mesures SRS, la sélection du meilleur faisceau Rx parmi l'ensemble de faisceaux Rx candidats, dans lequel le faisceau sélectionné est le meilleur faisceau Rx sélectionné.

5. Procédé selon l'une quelconque des revendications 1 à 4, dans lequel
le premier FPD comprend un capteur d'image, et
le procédé comprend en outre :
par le premier FPD, l'utilisation du capteur d'image pour déterminer une distance entre le premier FPD et le deuxième FPD ; et
par le premier FPD, l'utilisation de la distance déterminée pour sélectionner une puissance de transmission à utiliser dans l'établissement d'une connexion de liaison latérale, SL, de dispositif à dispositif, D2D, avec le deuxième FPD.

6. Procédé selon l'une quelconque des revendications 1 à 5, dans lequel le premier FPD est un smartphone comprenant une application de géorepérage, GFA.

7. Programme informatique (1143) comprenant des instructions (1144) qui, lorsqu'elles sont exécutées par une circuiterie de traitement (1102) d'un dispositif de poteau de clôture, FPD (FPD A), amènent le FPD à réaliser le procédé selon l'une quelconque des revendications 1 à 6.

8. Support contenant le programme informatique selon la revendication 7, dans lequel le support est l'un parmi un signal électronique, un signal optique, un signal radio et un support de stockage lisible par ordinateur (1142).

9. Premier dispositif de poteau de clôture (FPD A) de géorepérage dans une zone géorepérée (399), définie par un ensemble de N dispositifs de poteaux de clôture, FPD, où N est supérieur ou égal à 3 de sorte que l'ensemble de N FPD comprenne au moins le premier FPD (FPD A), un deuxième FPD (FPD B) et un troisième FPD (FPD C), le premier FPD comprenant une circuiterie de traitement configurée pour :
déterminer un premier indicateur de direction indiquant une première direction depuis le premier FPD vers un dispositif de communication ;
déterminer un deuxième indicateur de direction indiquant une deuxième direction depuis le premier FPD vers le deuxième FPD, dans lequel le deuxième indicateur de direction est utilisé pour définir une zone de couverture pour le premier FPD ;
déterminer, sur la base du premier indicateur de direction et du deuxième indicateur de direction, si le dispositif de communication est ou non dans la zone de couverture ;
déterminer un troisième indicateur de direction indiquant une direction depuis le premier FPD vers le troisième FPD, dans lequel la détermination, sur la base du premier indicateur de direction, si le dispositif de communication est ou non à l'intérieur de la zone de couverture comprend la détermination si la première direction est entre : i) la direction depuis le premier FPD vers le deuxième FPD et ii) la direction depuis le premier FPD vers le troisième FPD, et
déterminer que : soit i) le dispositif de communication est à l'intérieur de la zone de couverture, soit ii) le dispositif de communication n'est pas l'intérieur de la zone de couverture.

10. Premier FPD selon la revendication 9, configuré en outre pour déterminer le deuxième indicateur de direction en réalisant un processus de gestion de faisceau avec le deuxième FPD.

11. Premier FPD selon la revendication 9 ou 10, configuré en outre pour sélectionner le deuxième indicateur de direction du fait de la réalisation du processus de gestion de faisceau, dans lequel le deuxième indicateur de direction est un indice de faisceau d'un faisceau sélectionné.

12. Premier FPD selon l'une quelconque des revendications 9 à 11, dans lequel le premier FPD est configuré pour réaliser le processus de gestion de faisceau par :
la transmission de signaux de référence de sondage, SRS, au deuxième FPD à l'aide d'un ensemble de faisceaux de transmission, Tx, et la réception, depuis le deuxième FPD, d'un rapport de mesure comprenant des informations identifiant le meilleur faisceau Tx parmi l'ensemble de faisceaux Tx, dans lequel le faisceau sélectionné est le meilleur faisceau Tx identifié, ou
pour chaque faisceau de réception, Rx, inclus dans un ensemble de faisceaux Rx candidats, l'utilisation du faisceau Rx pour mesurer un SRS transmis par le deuxième FPD et, sur la base des mesures SRS, la sélection du meilleur faisceau Rx parmi l'ensemble de faisceaux Rx candidats, dans lequel le faisceau sélectionné est le meilleur faisceau Rx sélectionné.

13. Premier FPD selon l'une quelconque des revendications 9 à 12, dans lequel
le premier FPD comprend un capteur d'image, et est en outre configuré pour :
utiliser le capteur d'image pour déterminer une distance entre le premier FPD et le deuxième FPD ; et
utiliser la distance déterminée pour sélectionner une puissance de transmission à utiliser dans l'établissement d'une connexion de liaison latérale, SL, de dispositif à dispositif, D2D, avec le deuxième FPD.

14. Premier FPD selon l'une quelconque des revendications 9 à 13, dans lequel le premier FPD est un smartphone.
